(19) Europäisches Patentamt / European Patent Office / Office européen des brevets

(11) **EP 4 668 616 A1**

(12) **EUROPEAN PATENT APPLICATION**

(43) Date of publication:
**24.12.2025 Bulletin 2025/52**

(21) Application number: **25183745.6**

(22) Date of filing: **18.06.2025**

(51) International Patent Classification (IPC):
*H04B 10/077* (2013.01)    *G01H 9/00* (2006.01)
*G01V 1/22* (2006.01)

(52) Cooperative Patent Classification (CPC):
**H04B 10/0775; G01H 9/004; G01V 1/226**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.06.2024  CN 202410806505**

(71) Applicant: **Nokia Solutions and Networks Oy
02610 Espoo (FI)**

(72) Inventors:
• **HU, Xiao Feng
  Shanghai, 201200 (CN)**

• **ZHANG, Dong Xu
  Shanghai, 200129 (CN)**
• **HUANG, Xiao An
  Shanghai, 200000 (CN)**
• **ZHANG, Kai Bin
  Shanghai, 201204 (CN)**
• **YI, Xiao Bo
  Shanghai, 200127 (CN)**

(74) Representative: **DREISS Patentanwälte PartG mbB
Friedrichstraße 6
70174 Stuttgart (DE)**

(54) **SIGNAL DETECTION DEVICES, METHODS, AND COMPUTER READABLE MEDIA TO DETERMINE THE STATE OF POLARIZATION OF A RECEIVED OSC SIGNAL**

(57)    An optical network system and a signal detection device, a detection method, a computer-readable medium, and a computer program product applied therein are disclosed. An exemplary detection device may comprise: a receiving module configured to receive optical supervisory channel (OSC) signals transmitted via an optical fiber span; a sensing module connected to the receiving module, configured to perform a non-coherent detection on at least a portion of the OSC signal; and a signal processing module configured to determine the state of polarization (SOP) information of the OSC signal based on the results of the non-coherent detection.

FIG 4

**Description**

TECHNICAL FIELD

The present disclosure relates to the field of optical communication technology, and more particularly, to a signal detection device, a signal detection method, and a computer readable storage medium used in an optical network system.

BACKGROUND

Optical communication networks are widely used in data communication due to their advantages such as ultra-high bandwidth and low electromagnetic interference. With the widespread deployment of optical transmission networks, optical fiber sensing based on optical fiber network infrastructure has become a research hotspot and development direction in recent years. For example, for network operators, utilizing existing communication fibers to extract additional environmental sensing information can develop value-added services without introducing excessive additional costs.

Several optical sensing technologies have been proposed for application in communication networks. For example, the optical time domain reflectometer (OTDR) technology based on Rayleigh backscattering can be used to detect fiber faults and losses in optical access networks. However, this technology has some shortcomings. For example it requires specialized equipment to generate light pulses of specific wavelengths, which is costly and complex. In addition, OTDR technology can only detect defects in the fiber itself, such as whether the fiber is damaged or broken, but is difficult to be used for detecting changes in the surrounding environment.

Another method is to use the state-of-polarization (SOP) and phase information of long-distance optical fiber coherent transmission systems for event detection. Disturbances in the environment surrounding optical fibers, such as natural phenomena like earthquakes and lightning, or human activities like construction and train operation, can cause vibrations in optical fibers, resulting in changes in the SOP of signal transmission within the fibers. By obtaining SOP tracking information and analyzing it, useful information such as the type of occurring event can be determined. For example, by monitoring the polarization changes of conventional optical communication channels, earthquakes occurring along submarine cables can be detected. However, SOP information obtained based on coherent transmission systems is susceptible to interference from a large amount of background noise and can only provide limited spatial information.

SUMMARY

The various exemplary embodiments of the present disclosure are intended to address at least a portion of the above-mentioned problems or issues.

According to a first aspect of the present disclosure, there is provided a detection device comprising: a receiving module configured to receive an optical supervisory channel (OSC) signal transmitted via an optical fiber span; a sensing module connected to the receiving module, configured to perform a non-coherent detection on at least a portion of the OSC signal; and a signal processing module configured to determine state of polarization (SOP) information of the OSC signal based on a result of the non-coherent detection.

In some embodiments, the detection device may further comprise a signal separator configured to separate the OSC signal into a plurality of portions, one portion of which being used for the non-coherent detection.

In some embodiments, the sensing module may comprise: a polarization beam splitter for decomposing at least a portion of the OSC signal into a first sensing signal and a second sensing signal, wherein the first sensing signal and the second sensing signal have a first polarization direction and a second polarization direction, respectively; a first coupler used to separate the first sensing signal into a first signal and a second signal; a second coupler used to separate the second sensing signal into a third signal and a fourth signal; a polarization rotator for receiving the third signal and transforming a polarization direction of the third signal to the first polarization direction to form a fifth signal; a third coupler used to combine the second signal and the fifth signal to form a sixth signal; a first detector used to measure the first signal strength of the first signal; a second detector used to measure the second signal strength of the fourth signal; and a third detector used to measure the third signal strength of the sixth signal.

In some embodiments, the sensing module may further comprise a time delayer connected between the first coupler and the third coupler for delay the second signal.

In some embodiments, each of the first detector, second detector, and third detector may comprise a photoelectric conversion device and a power meter.

In some embodiments, the signal processing module may also be configured to determine event information associated with the optical fiber span based on SOP information at a plurality of time points.

In some embodiments, the detection device may further comprise a transmitting module configured to transmit a processing result of the signal processing module to the network management module via an optical supervisory channel (OSC).

In some embodiments, at least one of the receiving module and the transmitting module may be integrated in an optical supervisory channel (OSC) module.

According to a second aspect of the present application, there is provided an optical network system comprising: a transmitter; a receiver connected to the transmitter via an optical fiber; and a plurality of detection devices described in the first aspect, wherein each detection device is used to detect SOP information of OSC signals in a different fiber span of the optical fiber.

In some embodiments, the optical network system may further comprise a network management module that is in communication connection with each of the plurality of detection devices.

According to a third aspect of the present application, a detection method is provided, which may comprise: receiving an optical supervisory channel (OSC) signal transmitted via an optical fiber span; receiving at least a portion of the OSC signal and performing a non-coherent detection on at least a portion of the OSC signal; and based on a result of the non-coherent detection, determining state of polarization (SOP) information of the OSC signal.

In some embodiments, the method may further comprise: separating the OSC signal into a plurality of portions, one portion of which being used for the non-coherent detection.

In some embodiments, receiving at least a portion of the OSC signal and performing non-coherent detection on the at least portion of the OSC signal may comprise: decomposing the at least portion of the OSC signal into a first sensing signal and a second sensing signal, the first sensing signal and the second sensing signal having a first polarization direction and a second polarization direction, respectively; separating the first sensing signal into a first signal and a second signal; separating the second sensing signal into a third signal and a fourth signal; receiving the third signal and convert its polarization direction to the first polarization direction to form a fifth signal; combining the second signal and the fifth signal to form a sixth signal; measuring a first signal strength of the first signal; measuring a second signal strength of the fourth signal; and measuring a third signal strength of the sixth signal.

In some embodiments, the method may further comprise: performing a time delay processing on the second signal before combining the second signal and the fifth signal to form the sixth signal.

In some embodiments, the first signal strength, second signal strength, and third signal strength are obtained by converting the respective optical signals into electrical signals using a photoelectric conversion device and measuring the electrical signals using a power meter.

In some embodiments, the method may further comprise determining event information associated with the optical fiber span based on SOP information at a plurality of time points

In some embodiments, the method may further comprise transmitting the state of polarization (SOP) information to a network management module via an optical supervisory channel (OSC).

According to a fourth aspect of the present application, there is provided an apparatus for signal detection, comprising: at least one processor; and at least one memory for storing instructions, wherein the instructions, when executed by the at least one processor, cause the apparatus to perform at least the method according to the third aspect.

According to a fifth aspect of the present disclosure, there is provided a computer program product comprising (computer executable) program instructions that, when executed (or run) by a processor, cause the processor to perform the method according to the aforementioned third aspect.

The computer program product may comprise or be embodied as a computer-readable (storage) medium, on which computer executable computer program instructions and/or programs that can be directly loaded into the internal memory of the computer or its processor are stored.

BRIEF DESCRIPTION OF THE DRAWINGS

Figure 1 shows a schematic diagram of a long-distance transmission link using coherent transceivers in the core network;

Figure 2 shows a schematic diagram of the composition of an optical network system according to an exemplary embodiment of the present disclosure;

Figure 3 shows a schematic diagram of the principle of OSC signal reception according to an exemplary embodiment of the present disclosure;

Figure 4 shows a schematic diagram of the structural composition of the sensing module in the detection device according to an exemplary embodiment of the present disclosure;

Figure 5 shows a schematic diagram of using Poincaré spheres to characterize the polarization state SOP;

Figure 6 shows a schematic diagram of a simulation model for non-coherent polarization detection according to an exemplary embodiment of the present disclosure;

Figures 7A and 7B show simulation diagrams of tracking and detecting polarization state SOP changes of OSC signals according to an exemplary embodiment of the present disclosure;

Figure 8 shows a flowchart of the detection method according to an exemplary embodiment of the present disclosure;

Figure 9 shows a schematic block diagram of an optical network device according to an exemplary embodiment of the present disclosure.

The same or substantially same elements, operations, and steps shown in various figures may be represented by the same reference numerals. For clarity purposes, not every component, operation, and step is shown in every figure.

DETAILED DESCRIPTION

The exemplary embodiments of the present disclosure will be described in more detail below with reference to the accompanying drawings. It should be understood that the present disclosure should not be interpreted as being limited to the exemplary embodiments described herein, but may also be implemented in various other forms, and these exemplary embodiments are provided only for a more thorough and complete understanding of the present disclosure. It should also be understood that the accompanying drawings of this disclosure are provided only as examples and are not intended to limit the precise form of the embodiments or to limit the scope of protection of this disclosure.

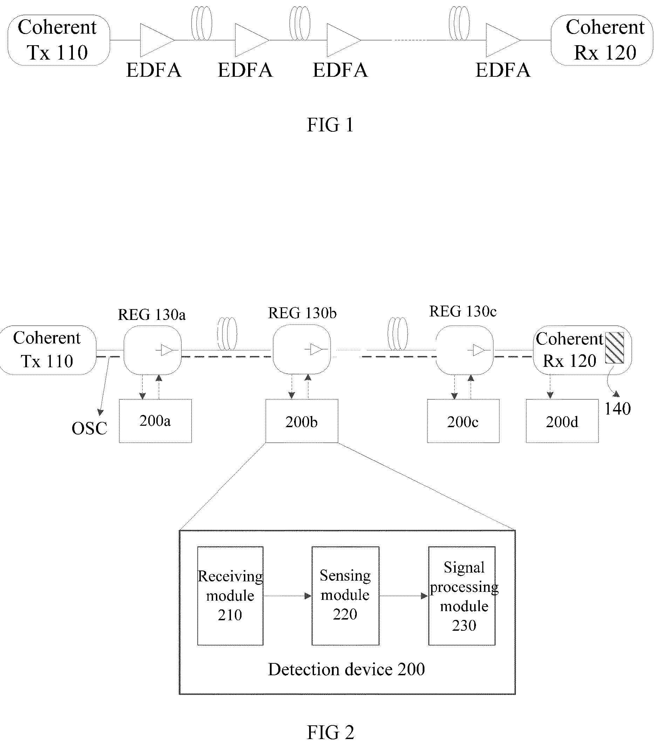

As mentioned earlier, researchers attempted to extract polarization information by using existing deployed coherent optical network transceiver systems. Figure 1 shows a schematic diagram of a long-distance transmission link using a coherent transceiver (TRx) in the core network. Typically, the core network can be, for example, a dense wavelength division multiplexing (DWDM) network based on an optical transmission network (OTN). This disclosure can be improved based on this network. As shown in Figure 1, the optical transmission network comprises multiple pairs of transmitters 110 and receivers 120 (only one pair is shown in the figure), as well as a channel (such as optical fibers) connecting the two. For long-distance optical transmission networks, the fiber length can range from tens to thousands of kilometers. The network can improve data rates by using coherent optical transmission, wherein the data can be modulated onto an optical carrier signal, which is transmitted from transmitter 110 to receiver 120 via optical fiber, and then the receiver 120 can recover the data from the received optical signal. In addition, several to dozens of optical relay devices can be installed on the transmission link to maintain the quality of signals during long-distance transmission. For example, the relay devices comprise amplifiers such as erbium-doped fiber amplifiers (EDFAs), which can amplify and process the transmitted optical signals. It can be understood that although the optical transmission link is described in terms of OTN network, the embodiments of the present disclosure can also be applied to other fiber based transmission networks such as passive optical network (PON) and data center interconnect (DCI), that is, the term "optical communication network" and "optical network" herein comprise various network systems such as OTN and PON that use optical signals for data transmission.

A digital signal processor (DSP) can be installed on the coherent receiver 120 side to analyze the received optical signal and extract polarization state (SOP) information. However, for terrestrial optical fiber cables, due to being subjected to changes regarding such as temperature and airflow of environment around the hundreds to thousands of kilometers optical cables, as well as vibration interference caused by human or traffic, the output SOP information contains a large amount of background noise, making it difficult to detect events based on it. Therefore, this method is generally implemented with the help of submarine optical fiber cables.

In addition, this SOP based event sensing method can only be performed in an end-to-end manner. The EDFA amplifier set along the optical fiber link is only used to amplify the optical signal, and there is no coherent receiver at the EDFA node to extract SOP information. That is to say, even if the vibration mode of the fiber is detected at the side of coherent receiver 120, due to the lack of spatial information along the fiber link, only event information with lower spatial resolution can be obtained.

In view of the above analysis and research by the inventors, some aspects of the present disclosure provide a signal detection device and corresponding detection method in an optical network to solve the above technical problems and other problems. The basic idea of this disclosure is to utilize the optical supervisory channel (OSC) in existing terrestrial optical transmission networks to obtain polarization state (SOP) information and changes at the granularity of an optical fiber span. The present disclosure achieves a good balance between cost-effectiveness and detection performance by multiplexing existing OSC devices and wavelengths, thereby could provide high spatial resolution event detection capabilities only by low-cost direct detection circuits (i.e. non-coherent detection). In the following the exemplary embodiments of the present disclosure will be described in detail with reference to Figures 2 to 7.

Figure 2 shows a schematic diagram of the composition of an optical network system according to an exemplary embodiment of the present disclosure. As shown in Figure 2, the optical network comprises a transmitter 110 and a receiver 120, which are in communication connection with each other through optical fiber. Herein, transmitter 110 and receiver 120 can generally be referred to as optical transceivers (OTs), which means they both can perform bidirectional transmission and reception of data. For terrestrial optical networks, optical fiber links are optical cables containing multiple fibers, such as standard single-mode fibers or multi-core fibers. The data is transmitted in the form of optical pulses through fibers, such as from transmitter 110 to receiver 120. In order to achieve long-distance transmission, multiple optical relay devices can be installed along the optical fiber link (Figure 2 shows schematically three relay devices, namely 130a, 130b, and 130c). The optical relay devices comprise optical amplifiers (such as EDFA) to amplify the power of the optical signal, to compensate for transmission loss to improve the optical signal-to-noise ratio. Correspondingly, the optical fiber link comprises multiple optical fiber spans connected via optical relay devices.

In addition to the data channel, the optical fiber may also comprise an optical supervisory channel (OSC), which uses dedicated wavelengths (e.g., outside the optical signal band carrying data) for operation, maintenance and management (OAM), such as monitoring the operation states of each optical fiber span. The OSC channel is connected between two adjacent transmission nodes in the network (e.g., optical relay devices 130a, 130b). An optical supervisory channel module (OSC module) can be installed at the transmission node, which has optical transmission and reception functions. At the transmitting end of the OSC channel, the OSC module generates an OSC signal and combines it with the optical signal of the data channel for output; at the receiving end of the OSC channel, the OSC signal is separated from the received optical signal and processed for channel monitoring.

According to some embodiments of the present disclosure, multiple detection devices can be set at multiple OSC modules respectively, and they can be configured to detect SOP information of OSC signals in different fiber spans of the optical fiber link. In some implementations, a detection device is correspondingly installed at each optical relay device or OSC module. As shown in Figure 2, detection devices 200a, 200b, and 200c are respectively installed at optical relay devices 130a, 130b, and 130c. In addition, a detection device 200d is also installed at the coherent receiver 120, which enables SOP information detection of OSC signals across all an optical fiber spans. Herein, the detection devices 200a, 200b, 200c, 200d, etc. can also be collectively referred to as detection device 200. In some implementations, detection devices 200 can be installed at part of the optical relay devices or OSC modules according to the deployment of optical fibers, in order to achieve detection effects while saving costs as much as possible.

The detection device 200 can dynamically detect the OSC signal in the optical fiber span (the optical fiber link between two optical nodes) to obtain SOP information at the granularity of the optical fiber span and track its changes over time. Due to the correlation between changes in SOP and mechanical disturbances applied to optical fibers, tracking SOP information can reveal relevant events that cause mechanical disturbances, such as natural phenomena for example earthquakes and lightning, or human activities for example construction and train operations. As described earlier, the OSC channel terminates at two adjacent optical relay devices, and the OSC channels of each optical fiber span are independent of each other. Therefore, each detection device 200 can detect the SOP information of the OSC signal transmitted in its corresponding optical fiber span. Therefore, the detection device 200 has the ability to detect event information on each optical fiber span, thus improving the spatial resolution based on optical fiber detection or sensing.

In some embodiments, the optical network system may further comprise a network management module 140 that is in communication connection with each of the multiple detection devices 200, namely detection devices 200a, 200b, and 200c. The network management module 140 can be set at the coherent receiver 120, for example. The OSC module can send the detected OAM related information to the network management module 140 via the OSC channel. At the same time, the detection device 200 can also send the detected SOP information or event analysis results to the network management module 140 via the OSC channel. Upon receiving information from each OSC module and/or detection device, the network management module 140 can collect and learn about the working conditions along the optical fiber link and the spatial distribution of detected events.

In some embodiments, the detection device 200 can be designed to be integrated with the OSC module, that is, both can be embedded in the same product assembly to enhance the functional characteristics of the product. Furthermore, as both the detection device 200 and the OSC module are implemented based on the OSC channel, they can share the function of signal reception or transmission. For example, the receiving module and/or transmitting module of the detection device 200 can be integrated into the OSC module. Alternatively, in other embodiments, the signal transceiver module of the detection device 200 may be set separately from the signal transceiver module of the OSC module.

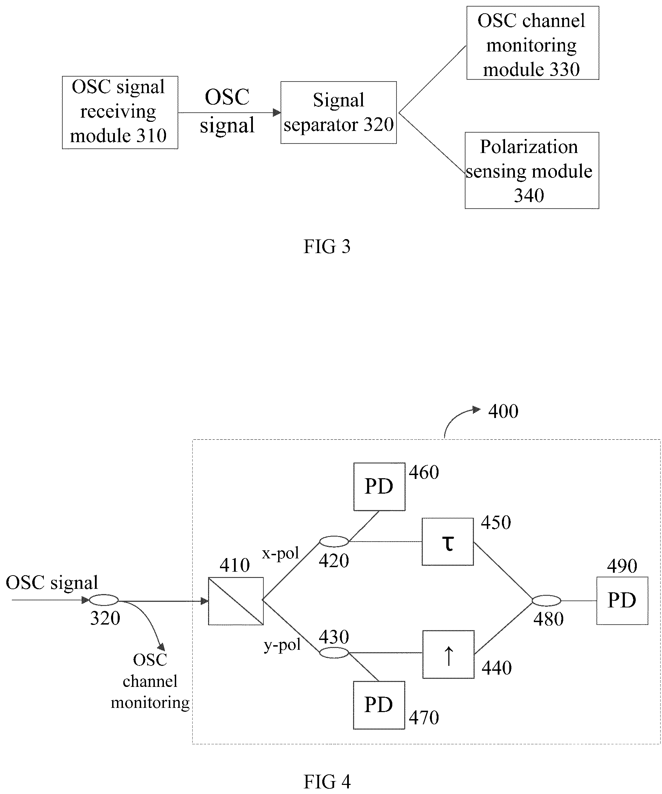

Figure 3 shows a schematic diagram of the principle of the OSC module and the detection device 200 sharing the OSC signal reception function. As shown in Figure 3, the integrated assembly of the OSC module and the detection device comprise a common OSC signal receiving module 310, which can be configured with an OSC band filter, for example, to separate the OSC signal from the received optical signal. In one embodiment, the separated OSC signal can continue to pass through a signal separator 320 (such as an optical coupler), which can separate the OSC signal into two or more portions, one portion of which can be used for OSC channel monitoring and the other can be used for polarization sensing. For example, the OSC channel monitoring path may comprise an OSC channel monitoring module 330 configured to detect OSC signals in the path, and based on the detection results, OAM and service information (such as loss of data carrying optical signals, etc.) can be obtained; the polarization sensing path may comprise a polarization sensing module 340 configured to perform a non-coherent detection on the OSC signal in the path, and based on the analysis of the detection results, polarization state information of the OSC signal in the optical fiber span can be obtained. In addition, event information associated with the optical fiber span can be obtained by further processing based on this polarization state information. Herein, "non-coherent detection" refers to the fact that the input signal of the polarization sensing module 340 only has OSC signal, and the OSC signal is directly detected instead of relying on the local oscillator signal emitted by the laser for polarization sensing like a coherent receiver. This helps to reduce the complexity of the product's optoelectronic assemblies.

In the embodiments of the present disclosure, the integrated assembly of the OSC module and the detection device share the same receiving module, which facilitates upgrading on the basis of existing products. Monitoring the OSC channel not only obtains OAM service messages, but also signal polarization information or fiber based event information, which expands the functionality of the integrated assembly. In one embodiment, when it is necessary to send the obtained polarization state information and/or event information to the network management module, the OSC module and the detection device may also share the same transmitting module to send the signal processing results to the network management module via the OSC channel.

Referring back to Figure 2, in combination with the previous description, the detection device 200 of the embodiment of the present disclosure can be integrated with an OSC module and installed at each optical relay device, and can comprise the following modules: a receiving module 210, using for example the OSC signal receiving module 310 shown in Figure 3, configured to receive optical supervisory channel OSC signals transmitted via an optical fiber span; a sensing module 220 connected to the receiving module 210 and configured to receive at least a portion of the OSC signal as a sensing signal, and perform a non-coherent detection on the sensing signal. Referring to Figure 3, the sensing module 220 can be indirectly coupled to the receiving module 210 through a signal separator. In other embodiments, the sensing module 220 can also be directly coupled to the receiving module 210. The detection device 200 may also comprise a signal processing module 230, which is coupled to the sensing module 220 and configured to determine the polarization state SOP information of the OSC signal based on the results of the non-coherent detection. Herein, the term "SOP information" comprises but is not limited to various parameter information that can determine the polarization state of the OSC signal, as well as parameter information that can characterize the polarization state of the OSC signal, which will be described in detail below.

In one embodiment, the signal processing module 230 may also be configured to determine event information associated with the optical fiber span based on SOP information at a plurality of time points. For example, every predetermined time, the signal processing module 230 can determine the SOP information of the OSC signal transmitted in the optical fiber span during that predetermined time period. Thus, after a certain period of time, the signal processing module 230 can track and lean about whether the polarization state of the OSC signal has changed in the time domain. If the polarization state changes, it indicates that the optical fiber is subjected to different stresses in different directions, that is, specific events may exist or occur in the environment surrounding the fiber span. Therefore, based on the analysis of SOP information at a plurality of time points, the signal processing module 230 can determine the event information that causes changes in polarization state, which enables the detection device of this embodiment to have a capability of perceiving the optical fiber environment.

In an embodiment, the signal processing module 230 may use one or more trained machine learning models (e.g., neural network classification algorithms) to determine the type of event and other information, such as earthquakes, vehicle movements, etc, based on SOP information at a plurality of time points. For example, one or more models, such as neural network models, can be pre-trained with multiple SOP information corresponding to known types of events and SOP information corresponding to no-events as training inputs, and corresponding event labels or no-events as training outputs. The trained model can be embedded in the signal processing module 230 for identifying events surrounding environment of an optical fiber span based on the results of the sensing module 220.

In an embodiment, the signal processing module 230 may be implemented as a software processing module or program that, when executed by a central processing unit (CPU) or a digital signal processor (DSP), performs corresponding operations or actions to obtain SOP information and event information. Alternatively, the signal processing module 230 can also be implemented in hardware form, such as an application specific integrated circuit (ASIC), field programmable gate array (FPGA), or other programmable logic devices. This disclosure does not make any limitation in this respect.

In one embodiment, the detection device 200 may further comprise a transmitting module (not shown), which may be integrated into the optical supervisory channel (OSC) module, and may be configured to send the processing results (such as SOP information, event information) of the signal processing module 230 to the network management module 140 through the optical supervisory channel. The sent information may also comprise the relevant identification (ID) information of the detection device, which is beneficial for the network management module 140 to obtain the spatial distribution of the relevant information.

The technical solution of the embodiments of the present disclosure can be applied to various optical networks (such as DWDM networks). By directly detecting the OSC signal, the polarization state change of the transmitted signal in the optical fiber between two adjacent nodes in the optical network can be tracked and obtained. The detection equipment does not require additional auxiliary signals or coherent measurements, thereby making it easy to upgrade based on existing equipment and achieve high spatial resolution event detection at a lower cost.

Below is a detailed description of the structure and working principle of some assemblies of the detection device 200 in the embodiments of the present disclosure. Figure 4 shows a schematic diagram of the structural composition of the sensing module 400 in the detection device 200 according to an exemplary embodiment of the present disclosure. In order to more clearly describe the working principle of the sensing module, Figure 4 also shows some components coupled to its signal.

As shown in Figure 4, the sensing module 400 comprises a polarization beam splitter (PBS) 410, which can be connected to an OSC signal receiving module 310 or a signal separator 310 (e.g., an optical coupler), for receiving OSC signals (hereinafter also referred to as "sensing signals") for non-coherent detection. PBS 410 can decompose or separate the received sensing signal into a first sensing signal and a second sensing signal, wherein the first sensing signal and the second sensing signal have a first polarization direction and a second polarization direction, respectively. For example, the first sensing signal is the x-polarized component of the received OSC signal, and the second sensing signal is the y-polarized component of the received OSC signal. It can be understood that the first sensing signal can also be a y-polarized component, and correspondingly, the second sensing signal is an x-polarized component.

Optical couplers 420 and 430 can be respectively installed in the two output paths of the polarization beam splitter 410 to further separate the first sensing signal and the second sensing signal. For example, the first optical coupler 420 separates the received x-polarized component into a first signal and a second signal, and the second optical coupler 430 separates the received y-polarized component into a third signal and a fourth signal. Preferably, the first optical coupler 420 and the second optical coupler 430 can separate the received optical signal into two uniform parts, which facilitates subsequent polarization state (SOP) calculations.

One of the two output ports of the first optical coupler 420 and the second optical coupler 430 is respectively connected to an optical detection device. Referring to Figure 4, a photoelectric conversion device 460 such as a photodiode (PD) located on the first path can convert the first optical signal into a first electrical signal, and a photoelectric conversion device 470 located on the second path can convert the fourth optical signal into a second electrical signal. When the first optical coupler 420 and the second optical coupler 430 separate the received optical signal into two uniform parts, the two electrical signals reflect the optical signal intensity of the x-polarized component and y-polarized component, respectively. In an embodiment, a power meter (not shown) can be used to measure the power value of the electrical signal, for example, the measured power values of the first and second electrical signals are $p_1$ and $p_2$, respectively. Based on the measured $p_1$ and $p_2$, the power ratios $k$ and $1$-$k$ of the x-polarization component and y-polarization component of the OSC signal can be determined, where $k=p_1/(p_1+p_2)$, $1$-$k=p_2/(p_1+p_2)$. In an example, the measured power value can also be converted into a digital signal through an analog-to-digital converter (ADC) to facilitate subsequent signal processing and computation.

By analyzing the signals from the other output port of the first optical coupler 420 and the second optical coupler 430, the phase difference between the x-polarization component and the y-polarization component can be obtained. Continuing to describe the relevant principle with reference to Figure 4, the other output port of the second optical coupler 430 is connected to a polarization rotator 440, which can receive a third signal and transform the polarization direction of the third signal to the first polarization direction to form a fifth signal. In the example of Figure 4, the polarization rotator 440 can rotate the y-polarized third signal to the x-polarized fifth signal. Preferably, the other output port of the first optical coupler 420 is connected to a time delayer 450, which is used to delay the second signal in this path to compensate for the time difference caused by the polarization rotation of the third signal, thereby avoiding deviation in the calculation of the phase difference between the two signals. In one example, the delayer 450 is an adjustable delayer, the delay time of which can be controlled by a digital processing unit (such as signal processing module 230) to improve the compensation accuracy of the time difference between two optical paths.

Although Figure 4 shows that the polarization rotator 440 and the delayer 450 are connected to the second optical coupler 420 and the first optical coupler 410, respectively, it can be understood that the polarization rotator 440 can also be configured to be connected to the first optical coupler 420, and in this case, the delayer 450 is connected to the second optical coupler 430, which is also within the scope of protection of this disclosure.

The sensing module 400 also comprises an optical coupler 480, which combines the second and fifth signals which have passed through the delayer 450 and the polarization rotator 440, to form a sixth signal. The output port of optical coupler 480 is connected to an optical detection device, similar to the first and second electrical signals, the optical detection device comprises photoelectric conversion devices such as photodiodes 490 to convert the sixth signal into a third electrical signal, and a power meter can be used to measure the power value of the third electrical signal. The measured power value of the third electrical signal is denoted as $p_3$, and its power ratio relative to the two input signals of optical coupler 480 is $m=p_3/(p_1+p_2)$.

As described earlier, the second signal has a polarization direction same with that of the fifth signal processed by the polarization rotator 440, which can be represented as $Acos(\omega t)$ and $Bcos(\omega t+\delta)$, respectively. Wherein, A and B represent the amplitude of the signals, which are proportional to $\sqrt{k}$ and $\sqrt{1-k}$, respectively, $\omega$ represents the angular frequency of the signal, which is an inherent property of the detected OSC signal, and $\delta$ represents the phase difference between the second signal and the fifth signal. After obtaining $k$, $1$-$k$, and $m$ through measuring or calculating, the digital processing unit (such as signal processing module 230) can calculate the phase difference $\delta$ based on the following equation:

$$\left\| \sqrt{k}\cos(\omega t) + \sqrt{1-k}\cos(\omega t + \delta) \right\| = \sqrt{m} \quad (1)$$

Based on the calculation of $\delta$ and the principle of polarization, the polarization state SOP information of the OSC signal can be determined. Taking the polarization ellipse that characterizes the polarization state of a signal as an example, its azimuth $\psi$ and ellipticity parameter $\chi$ can be calculated based on the following equation:

$$\tan\left(2\psi\right) = 2\frac{\sqrt{k(1-k)}\cdot\cos(\delta)}{1-2k} \quad (2)$$

$$\sin\left(2\chi\right) = 2\sqrt{k(1-k)}\cdot\sin(\delta) \quad (3)$$

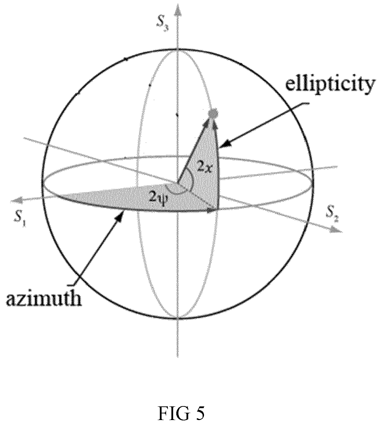

Figure 5 shows a schematic diagram of using Poincaré spheres to characterize the polarization state SOP. A Poincaré sphere is a sphere with the origin of a three-dimensional Cartesian coordinate system as its center, and three mutually orthogonal spatial axes represent the corresponding Stokes parameters of the light field. Any point on the sphere can characterize a polarization state SOP of light waves. The Stokes parameters $S_1$, $S_2$, and $S_3$ are related to the parameters $\psi$ and $\chi$, and the polarization vector can be given by the following equation:

$$S^{out} = \begin{bmatrix} S_1 \\ S_2 \\ S_3 \end{bmatrix} = \begin{bmatrix} \cos(2\chi)\cdot\cos(2\psi) \\ \cos(2\chi)\cdot\sin(2\psi) \\ \sin(2\chi) \end{bmatrix} \quad (4)$$

In an embodiment, based on the calculation method provided above, the signal processing module 230 can calculate and track the SOP information and its changes of the OSC signal in the time domain. Herein, "SOP information" can represent the parameter information of the polarization state of the OSC signal, such as the azimuth $\psi$ and ellipticity $\chi$ determined according to equations (2) and (3), or the Stokes parameters $S_1$, $S_2$, and $S_3$ determined according to equation (4). It can also represent the parameters that determine these parameter information, such as $k$, $1-k$, and $m$. Furthermore, based on the SOP information obtained at a plurality of time points through dynamic tracking, the signal processing unit 230 can use a pre-trained neural network classification model to determine the event information around the fiber span.

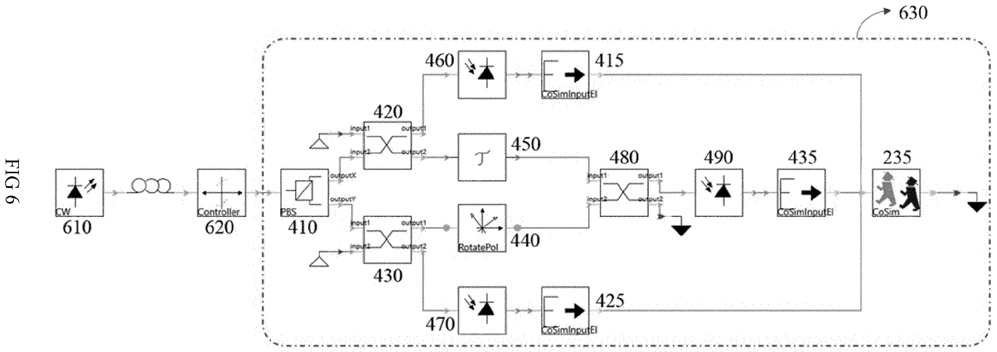

Figure 6 shows a schematic diagram of a simulation model for non-coherent polarization detection according to an exemplary embodiment of the present disclosure, which can be used to verify the feasibility and performance of the embodiments of the present disclosure. The simulation of the polarization detection system is implemented using VPI software, and the digital signal processing algorithm is implemented using Python scripts. A portion of the structural composition of the simulation system shown in Figure 6 is the same as the components described in connection with Figures 2-4. For the convenience of description, the same or similar components will be labeled with the same reference numerals as in Figure 2-4, and the arrangement and function of these components will only be briefly described.
As shown in Figure 6, the polarization detection simulation system mainly comprises a light wave generator 610, a polarization controller 620, and a polarization detection module 630. Wherein, the light wave generator 610 is used to simulate the OSC signal transmitted in the optical fiber. Before inputting the OSC signal into the polarization detection module 630 through the optical fiber, its polarization state is regulated by the polarization controller 620 to simulate the change in polarization state of the OSC signal in the real optical fiber environment.
The main functions of the polarization detection module 610 are similar to the detection device 200 described in connection with Figures 2-4. The polarization beam splitter 410 decomposes the received optical signal into x-polarization component and y-polarization component, and the optical couplers 420 and 430 further separate the x-polarization component and y-polarization component into two uniform parts, where one part of the optical signal is converted into an electrical signal through photodiodes 460 and 470, and the other parts are combined through optical coupler 480 after passing through delayer 450 and polarization rotator 440. The combined optical signal is converted into an electrical signal through photodiode 490.
Three electrical signals are collected through data interfaces 415, 425, and 435, and each data interface sends the corresponding electrical signal data to signal processor 235. The signal processor 235 can calculate the average power of each electrical signal and perform calculations to obtain parameters $p_1$, $p_2$, and $p_3$ (respectively corresponding to $m$, $k$, $1-k$ described earlier). The specific calculation method can refer to the relevant description in Figure 4 and will not be repeated here.

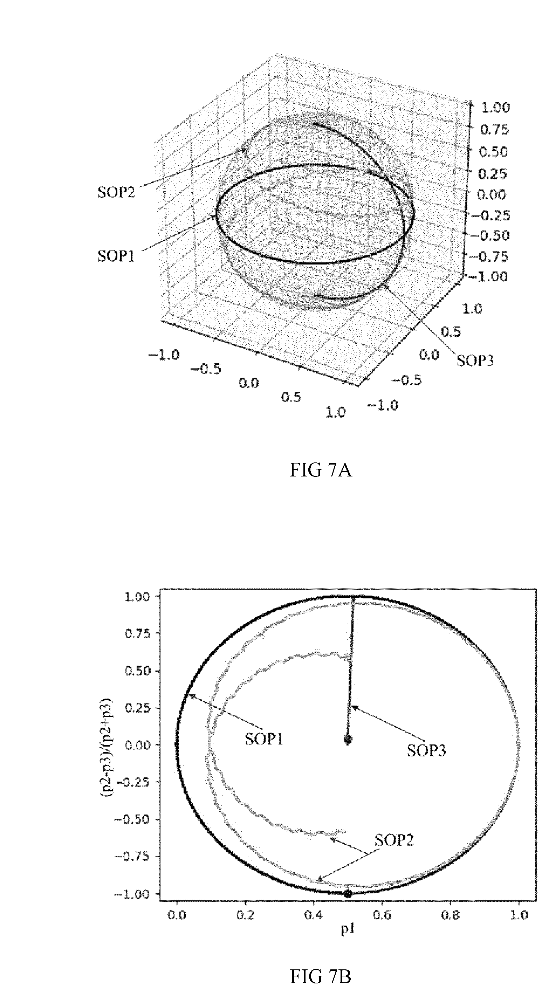

Figures 7A and 7B show a simulation diagram of tracking and detecting the polarization state SOP changes of OSC signals, wherein, Figure 7A shows three change paths of the input OSC signal SOP in the background of a Poincaré sphere (three coordinate axes represent Stokes parameters $S_1$, $S_2$, and $S_3$ respectively), respectively labeled as SOP1, SOP2, and SOP3. For example, SOP1 shows the polarization state changing along the equator of the Poincaré sphere, SOP2 shows the polarization state changing along a spiral trajectory of the sphere, and SOP3 shows the polarization state changing along one meridian of the sphere. Figure 7B shows the corresponding detection results, where the horizontal axis represents parameter $p_1$ and the vertical axis represents $(p_2-p_3)/(p_2+p_3)$. As shown, for the three change paths, when the polarization state of the OSC signal changes, the parameters $p_1$, $p_2$, and $p_3$ change accordingly. That is to say, the embodiments of the present disclosure can effectively track the polarization state changes of the OSC signal based on direct detection of the parameters $p_1$, $p_2$, and $p_3$ (i.e., m, k, 1-k).

According to the technical solution of the embodiments of the present disclosure, multiplexing OSC signals for direct detection can track and obtain the polarization state changes of the transmission signal in the optical fiber span in real time, without the need for coherent detection, and the obtained polarization information has high accuracy, thus achieving high spatial resolution event detection. The designed detection device has a simple structure and is easy to upgrade and modify on the basis of existing equipment, which can be realized as a value-added feature of optical transmission network products.

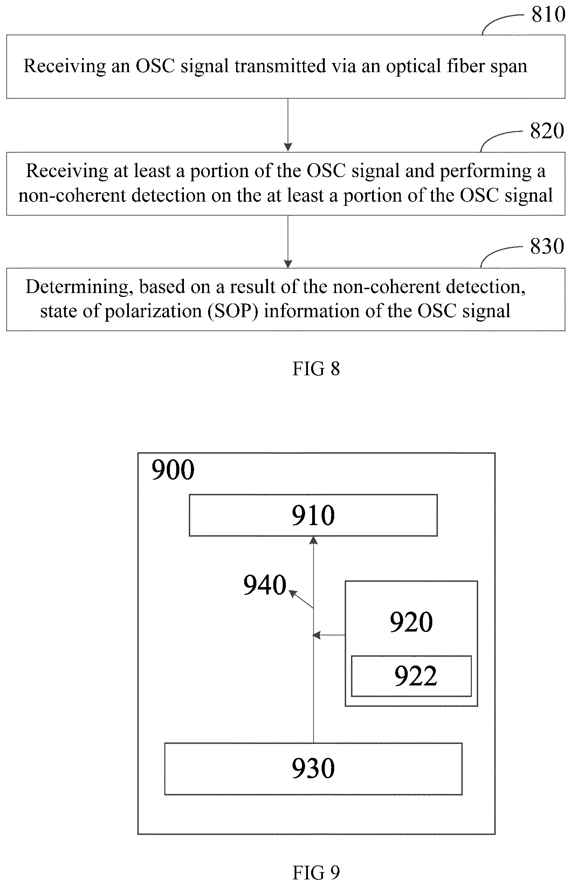

Figure 8 shows a flowchart of a detection method 800 according to an embodiment of the present disclosure. It can be understood that method 800 can be implemented, for example, at the detection device 200 shown in Figures 2 to 4. For the convenience of description, method 800 will be explained below in conjunction with Figures 2 to 4.

In step 810, the detection device receives the optical supervisory channel (OSC) signal transmitted via optical fiber span.

In an embodiment, the OSC signal can be received through the receiving module of the optical supervisory channel (OSC) module.

In step 820, the detection device receives at least a portion of the OSC signal and performing a non-coherent detection on the at least portion of the OSC signal.

In one embodiment, prior to step 820, the method may further comprise: separating the OSC signal into a plurality of portions, one portion of which is used for the non-coherent detection.

In one embodiment, prior to step 820, the method may further comprise: separating the OSC signal into a plurality of portions, one of which is used for the non-coherent detection.

In one embodiment, step 820 may comprise the following steps: decomposing the at least portion of the OSC signal into a first sensing signal and a second sensing signal, wherein the first sensing signal and the second sensing signal have a first polarization direction and a second polarization direction, respectively; separating the first sensing signal into a first signal and a second signal; separating the second sensing signal into a third signal and a fourth signal; receiving the third signal and converting its polarization direction to the first polarization direction to form a fifth signal; combining the second signal and the fifth signal to form a sixth signal; measuring the first signal strength of the first signal; measuring the second signal strength of the fourth signal; and measuring the third signal strength of the sixth signal.

In an embodiment, step 820 may further comprise: performing a delay processing on the second signal before combining it with the fifth signal to form the sixth signal.

In an embodiment, the first signal strength, second signal strength, and third signal strength are obtained by converting the corresponding optical signals into electrical signals using photoelectric conversion devices and measuring the electrical signals using a power meter.

In step 830, the state of polarization (SOP) information of the OSC signal is determined based on the results of the non-coherent detection.

In one embodiment, method 800 may further comprise determining event information associated with the optical fiber span based on SOP information at a plurality of time points.

In one embodiment, method 800 may further comprise sending the state of polarization (SOP) information and/or the event information to a network management module via an optical supervisory channel (OSC).

Figure 9 shows a structural block diagram of an optical network device 900 according to an exemplary embodiment of the present disclosure. The optical network device 900 can be implemented as the detection device 200 or part of its constitutional modules as described above. As shown in Figure 9, the network device 900 may comprise one or more processors 910, one or more memories 920, and one or more network interfaces 930, which can communicate with each other through a bus system 940.

The processor 910 may be, for example, a central processing unit (CPU), a general-purpose processor, a controller, a digital signal processor (DSP), an application specific integrated circuit (ASIC), a field programmable gate array (FPGA) or other programmable logic devices, transistor logic devices, hardware components, or any combination thereof. The processor 910 can run instructions in the memory 920 and/or exchange data with it, thereby controlling other components coupled through the bus 940 to cooperate and perform the methods, steps, or functions described above.

The memory 920 may comprise various forms of storage media or be implemented using any suitable data storage technology, such as volatile and/or non-volatile memory. Volatile memory can comprise, but is not limited to, random access memory (RAM), cache memory, etc. Non volatile memory can comprise but is not limited to read-only memory (ROM), hard disk, flash memory, etc. The term 'non-volatile' in this article refers to the limitation of the medium itself (i.e. tangible rather than signal), rather than the limitation of data storage persistence (e.g. RAM or ROM). In addition, at least one memory 920 may comprise, but is not limited to magnetic, optical, electromagnetic, infrared, or semiconductor systems, devices, components, or any combination thereof

The memory 920 may comprise computer instructions 922, which can be executed by the processor 910, so that the processor 910 can control other components coupled through the bus 940 to cooperate and perform the methods, steps, or functions related to the detection device 200 described above.

Network interface 930 can be a device with network data reception and transmission functions, such as a receiving circuit, receiver, I/O interface, etc.

According to an exemplary embodiment of the present disclosure, any one of (at least one) processor, (at least one) memory, and (at least one) interface, as well as any one of the units/devices shown, may be implemented as a separate module, chip, chipset, circuit, etc., or one or more of them may be implemented as a common module, chip, chipset, circuit, etc., respectively.

Some example embodiments also provide computer program code or instructions that, when executed by one or more processors, may cause a device or apparatus to perform the processes described above. The computer program code used to execute the process of the example embodiments can be written in any known or future developed programming language, such as Java, C++, C, and Assembler. Computer program code can be provided to one or more processors or controllers of a general-purpose computer, a specialized computer, or other programmable data processing device, such that when the program code is executed by the processor or controller, it enables the implementation of the functions/operations specified in the flowchart and/or block diagram. Program code can be executed entirely on local computing devices, partially on local computing devices, as a standalone software package, partially on local computing devices and partially on remote computing devices, or entirely on remote computing devices or servers.

Some example embodiments also provide a computer program product or computer-readable medium storing computer program code or instructions that, when executed by a processor, cause the detection device to perform the processing methods, steps, or functions described above. Computer readable media can be any tangible medium that can contain or store programs for use by instruction execution systems, devices, or equipment or be used in combination with them. Machine readable media can be machine readable signal media or machine readable storage media. Machine readable media may comprise, but are not limited to, electronic, magnetic, optical, electromagnetic, infrared, or semiconductor systems, devices, or equipment, or any suitable combination thereof. More specific examples of machine-readable storage media will comprise electrical connections with one or more wires, portable computer floppy disks, hard disks, random access memory (RAM), read-only memory (ROM), erasable programmable read-only memory (EPROM or flash memory), optical fibers, portable optical disc read-only memory (CD-ROM), optical storage devices, magnetic storage devices, or any suitable combination thereof.

The basic principles of the present disclosure have been described above in conjunction with the embodiments. However, it should be pointed out that the advantages, benefits, effects, etc. mentioned in the present disclosure are only examples and not limitations, and cannot be considered as necessary for various embodiments of the present disclosure. In addition, the specific details disclosed above are only for the purpose of illustration and ease of understanding, and not for limitation. The above details do not limit the present disclosure to necessarily adopt the specific details mentioned above for implementation.

The terms "component," "module," "system," etc. used in this disclosure are used to refer to computer related hardware, software, firmware, circuits or logic, general-purpose hardware or controllers, or other computing devices, or some combination thereof. The term 'circuit' used here may cover only hardware circuits or processors (or multiple processors), or a portion of the hardware circuit or processor, or its accompanying software or firmware implementation.

In addition, modifiers such as "first" and "second" throughout the specification and claims are typically intended to distinguish different elements, operations, etc., rather than emphasizing any importance or ranking. Therefore, the "first signal" can be referred to as the "second signal", the "third signal" can be referred to as the "fourth signal", and the "second signal" can be referred to as the "first signal", the "fourth signal" can be referred to as the "third signal", and so on.

Although some embodiments have been described, these embodiments have been given by way of example, which are not intended to limit the scope of the present disclosure. Various modifications, substitutions, and changes may be made to the form of the methods and systems described herein without departing from the spirit of the present disclosure. Therefore, it should be understood that the appended claims and their equivalents are intended to cover these forms or modifications falling within the scope and spirit of the various embodiments of the present disclosure.

**Claims**

1. A detection device (200), comprising:

    a receiving module (210), configured to receive an optical supervisory channel, OSC, signal transmitted via an optical fiber span;
    a sensing module (220) connected to the receiving module, configured to perform a non-coherent detection on at least a portion of the OSC signal; and
a signal processing module (230), configured to determine state of polarization, SOP, information of the OSC signal based on a result of the non-coherent detection.

2. The detection device (200) of claim 1, further comprising:
a signal separator, configured to separate the OSC signal into a plurality of portions, one portion of which being used for the non-coherent detection.

3. The detection device (200) of claim 1 or 2, wherein the sensing module comprises:

a polarization beam splitter for decomposing at least a portion of the OSC signal into a first sensing signal and a second sensing signal, the first sensing signal and the second sensing signal having a first polarization direction and a second polarization direction, respectively;
a first coupler for separating the first sensing signal into a first signal and a second signal;
a second coupler for separating the second sensing signal into a third signal and a fourth signal;
a polarization rotator for receiving the third signal and transforming a polarization direction of the third signal into the first polarization direction to form a fifth signal;
a third coupler for combining the second and fifth signals to form a sixth signal;
a first detector for measuring a first signal strength of the first signal;
a second detector for measuring a second signal strength of the fourth signal; and
a third detector for measuring a third signal strength of the sixth signal,
wherein for example the sensing module further comprises:

a time delayer connected between the first coupler and the third coupler, for delaying the second signal,
wherein for example each of the first detector, second detector, and third detector comprises a photoelectric conversion device and a power meter.

4. The detection device (200) of any of claims 1-3, wherein the signal processing module is further configured to determine event information associated with the fiber span based on SOP information at a plurality of time points.

5. The detection device (200) of any of claims 1-4, A) further comprising:

a transmitting module, configured to transmit a processing result of the signal processing module to a network management module via an optical supervisory channel, OSC,
and/or B) wherein at least one of the receiving module (210), the transmitting module (220) is integrated in an optical supervisory channel, OSC, module.

6. An optical network system, comprising:

a transmitter;
a receiver, connected to the transmitter via an optical fiber; and
a plurality of detection devices (200) as claimed in any of claims 1-8, wherein each of the detection devices (200) is used to detect SOP information of an OSC signal in a different fiber span of the optical fiber, respectively,
wherein for example the optical network system further comprises:
a network management module communicatively connected with each of the plurality of detection devices.

7. A detection method, comprising:

Receiving (810) an optical supervisory channel, OSC, signal transmitted via an optical fiber span;
receiving (820) at least a portion of the OSC signal and performing a non-coherent detection on the at least a portion of the OSC signal; and
determining (830), based on a result of the non-coherent detection, state of polarization, SOP, information of the OSC signal.

8. The method of detection of claim 7, further comprising:
separating the OSC signal into a plurality of portions, one portion of which being used for the non-coherent detection.

9. The detection method of claim 7 or 8, wherein receiving at least a portion of the OSC signal and performing a non-coherent measurement on at least a portion of the OSC signal comprises:

decomposing the at least portion of the OSC signal into a first sensing signal and a second sensing signal, the first sensing signal and second sensing signal having a first polarization direction and a second polarization direction, respectively;
separating the first sensing signal into a first signal and a second signal;

separating the second sensing signal into a third signal and a fourth signal;

receiving the third signal and transforming a polarization direction of the third signal into the first polarization direction to form a fifth signal;

combining the second and fifth signals to form a sixth signal;

measuring a first signal strength of the first signal;

measuring a second signal strength of the fourth signal; and

measuring a third signal strength of the sixth signal.

10. The method of detection of claim 9, further comprising:

performing a time delay process on the second signal before combining the second signal and the fifth signal to form a sixth signal.

11. The detection method of claim 9, wherein the first signal strength, second signal strength, and third signal strength are obtained by converting respective optical signals into electrical signals using a photoelectric conversion device and measuring the electrical signals using a power meter.

12. The detection method of any of claims 7-11, further comprising: A)

determining, based on SOP information at a plurality of time points, event information associated with the fiber span,

and/or B)transmitting the state of polarization, SOP, information to a network management module via an optical supervisory channel, OSC.

13. An apparatus (900) comprising:

at least one processor (910); and
at least one memory (920) storing instructions (922), that, when executed by the at least one processor (910), cause the apparatus (900) at least to perform the method of any of claims 11-17.

14. A computer readable medium (920) comprising instructions (922) thereon that, when executed by at least one processor (910), cause the processor (910) to perform the method of any of claims 7 to 12.

15. A computer program product (920) comprising instructions (922) that, when executed by at least one processor (910), cause the processor (910) to perform the method of any of claims 7 to 12.

Coherent Tx 110 — ▷ — EDFA — ((( — ▷ — EDFA — ((( — ▷ — EDFA — ⋯⋯ — ((( — ▷ — EDFA — Coherent Rx 120

FIG 1

REG 130a — ((( — REG 130b — ((( — REG 130c

Coherent Tx 110 — ▷ — ▷ — ⋯⋯ — ▷ — Coherent Rx 120

OSC

| 200a | 200b | 200c | 200d |

140

Detection device 200

| Receiving module 210 | → | Sensing module 220 | → | Signal processing module 230 |

FIG 2

13

OSC channel monitoring module 330

OSC signal receiving module 310 → OSC signal → Signal separator 320

Polarization sensing module 340

FIG 3

400

PD 460

τ 450

410 x-pol 420

OSC signal → 320 → 

OSC channel monitoring

y-pol 430

↑ 440

480

490 PD

PD 470

FIG 4

FIG 5

FIG 6

FIG 7A

FIG 7B

810

Receiving an OSC signal transmitted via an optical fiber span

820

Receiving at least a portion of the OSC signal and performing a non-coherent detection on the at least a portion of the OSC signal

830

Determining, based on a result of the non-coherent detection, state of polarization (SOP) information of the OSC signal

FIG 8

900

910

940

920

922

930

FIG 9

Europäisches Patentamt

European Patent Office

Office européen des brevets

# EUROPEAN SEARCH REPORT

**Application Number**

EP 25 18 3745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/146287 A1 (XIE CHONGJIN [US]) 12 May 2022 (2022-05-12) | 1,2,4-8, 12-15 | INV. H04B10/077 |
| A | * paragraphs [0001] - [0017] * <br> * paragraphs [0030] - [0042] * <br> * paragraph [0049] * <br> * paragraphs [0054] - [0056] * <br> * figures 1, 2A * | 3,9-11 | G01H9/00 <br> G01V1/22 |
| X | SASAKI YUSUKE ET AL: "State-of-Polarization Monitoring Employing Optical Supervisory Channel Enabling Instantaneous Fluctuation Detection and Localization", 2024 OPTICAL FIBER COMMUNICATIONS CONFERENCE AND EXHIBITION (OFC), OSA, 24 March 2024 (2024-03-24), pages 1-3, XP034604954, DOI: 10.1364/OFC.2024.W1B.5 [retrieved on 2024-05-16] | 1,2,4-8, 12-15 | |
| A | * the whole document * | 3,9-11 | |
| | | | **TECHNICAL FIELDS SEARCHED (IPC)** |
| A | US 2003/156286 A1 (TAKAGI TAKESHI [JP] ET AL) 21 August 2003 (2003-08-21) * paragraphs [0002] - [0005] * * paragraphs [0034] - [0039] * * figures 1, 2 * | 3,9-11 | H04B <br> G01V <br> G01H |

-/--

The present search report has been drawn up for all claims

| Place of search | Date of completion of the search | Examiner |
|---|---|---|
| Munich | 6 November 2025 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

**EP 25 18 3745**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU WEI ET AL: "High-Speed Silicon Integrated Polarization Stabilizer Assisted By a Polarimeter", JOURNAL OF LIGHTWAVE TECHNOLOGY, IEEE, USA, vol. 40, no. 12, 11 February 2022 (2022-02-11), pages 3794-3801, XP011910598, ISSN: 0733-8724, DOI: 10.1109/JLT.2022.3150563 [retrieved on 2022-02-11] * Section II.A * * figures 1, 2 * ----- | 3,9-11 | |
| | | | **TECHNICAL FIELDS SEARCHED (IPC)** |

The present search report has been drawn up for all claims

| Place of search | Date of completion of the search | Examiner |
|---|---|---|
| Munich | 6 November 2025 | Rolan Cisneros, E |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

# EP 4 668 616 A1

## ANNEX TO THE EUROPEAN SEARCH REPORT
## ON EUROPEAN PATENT APPLICATION NO.

EP 25 18 3745

06-11-2025

| Patent document cited in search report | Publication date | Patent family member(s) | Publication date |
|---|---|---|---|
| US 2022146287 A1 | 12-05-2022 | NONE | |
| US 2003156286 A1 | 21-08-2003 | NONE | |

EPO FORM P0459

For more details about this annex : see Official Journal of the European Patent Office, No. 12/82